# EUROPEAN PATENT SPECIFICATION

(11) **EP 4 251 437 B1**
(45) Date of publication and mention of the grant of the patent: **21.05.2025**
(21) Application number: 21824025.7
(22) Date of filing: 25.11.2021
(51) Int. Cl.: B60G 15/06, B60G 17/015, B60G 17/02, F16H 25/24, F16D 41/22

(54) **SHOCK ABSORBER AND SPRING ASSEMBLY FOR A VEHICLE SUSPENSION, COMPRISING AN ELECTROMECHANICAL ADJUSTMENT DEVICE FOR ADJUSTING THE VERTICAL POSITION OF THE SPRING AND AN ASSOCIATED BLOCKING SYSTEM, AND METHOD FOR MOVING THE SPRING PLATE OF THE SHOCK ABSORBER**
STOSSDÄMPFER UND FEDERANORDNUNG FÜR EINE FAHRZEUGFEDERUNG, UMFASSEND EINER ELEKTROMECHANISCHEN EINSTELLVORRICHTUNG ZUM EINSTELLEN DER VERTIKALEN POSITION DER FEDER UND EINEM ZUGEHÖRIGEN BLOCKIERSYSTEM, UND VERFAHREN ZUM BEWEGEN DES FEDERTELLERS DES STOSSDÄMPFERS
ENSEMBLE AMORTISSEUR ET RESSORT POUR UNE SUSPENSION DE VÉHICULE, COMPRENANT UN DISPOSITIF DE RÉGLAGE ÉLECTROMÉCANIQUE POUR RÉGLER LA POSITION VERTICALE DU RESSORT ET UN SYSTÈME DE BLOCAGE ASSOCIÉ, ET PROCÉDÉ DE DÉPLACEMENT DE LA COUPELLE DE RESSORT DE L'AMORTISSEUR

(30) Priority: 25.11.2020 IT 202000028382
(43) Date of publication of application: 04.10.2023
(73) Proprietor: Marelli Suspension Systems Italy S.p.A., 20011 Corbetta (MI) (IT)
(72) Inventor: DI VITTORIO, Marco, 10126 Torino (IT); GRECO, Giordano, 10137 Torino (IT); MARCHETTI, Simone, 10141 Torino (IT); MONCHIERO, Piero, 10137 Torino (IT); AMATI, Nicola, 10091 Alpignano (Torino) (IT); GALLUZZI, Renato, 10080 San Benigno Canavese (Torino) (IT); RUZIMOV, Sanjarbek, Pintak (Khorezm Region), 220400 (UZ); TESSARI, Federico, 00062 Bracciano (Roma) (IT); TONOLI, Andrea, 10051 Avigliana (Torino) (IT)
(74) Representative: Savoca, Agatino
(86) International application number: PCT/IB2021/060963
(87) International publication number: WO 2022/112988

(56) References cited:
- WO-A1-2019/097461
- CN-A- 107 757 286
- DE-A1- 102017 102 402
- DE-A1- 102018 128 595

## Description

This invention relates in general to a shock absorber and spring assembly for a vehicle suspension, which assembly is provided with an adjustment device for adjusting the vertical position of the spring and thus controlling the clearance of the vehicle from the ground.

In a vehicle suspension comprising a shock absorber and spring assembly, in which the shock absorber is connected at its lower end to a wheel carrier or to a suspension arm and at its upper end to the body of the vehicle, and in which the spring is arranged around the shock absorber and abuts at its lower end against a spring plate and at its upper end against the body of the vehicle, it is known to use an adjustment device arranged between the cylinder of the shock absorber and the spring plate to vary the vertical position of the spring and thus allow the clearance of the body of the vehicle from the ground to be adjusted.

The adjustment devices used for this purpose may be of different kinds, such as hydraulic devices, pneumatic devices, hydro-pneumatic devices and electromechanical devices. Of these, electromechanical adjustment devices are gaining more and more attention and interest on account of their high level of reliability, their relatively low cost, and their compactness by comparison with other types of adjustment devices.

More specifically, a shock absorber and spring assembly for a vehicle suspension that uses an electromechanical adjustment device comprises an electric motor adapted to generate a rotary motion and a screw and nut screw motion conversion mechanism adapted to convert the rotary motion generated by the electric motor into a translational motion of the spring plate.

The motion conversion mechanism in turn comprises a screw adapted to be rotated about its axis by the electric motor, and a nut screw which meshes with the screw and is connected to the spring plate for conjoint translation therewith, in such a way that, by activating the electric motor, the rotary motion transmitted by the electric motor to the screw is converted into translational motion of the nut screw, and thus into translational motion of the spring plate.

A solution of the type mentioned above is known, for example, from WO 2019/097461 A1, which discloses a spring and shock absorber assembly for a vehicle suspension, according to the preamble of claim 1, which assembly is designed to prevent the spring plate from rotating relative to the shock absorber without needing to use suitable anti-rotation means.

In this known solution, the screw and the nut screw of the motion conversion mechanism are arranged eccentrically with respect to the axis of the shock absorber, and the kinematic mechanism formed by the worm screw and by the nut screw is designed to have low efficiency (i.e. high levels of friction) such that it is an irreversible mechanism.

In so doing, the screw is only allowed to rotate relative to the nut screw when the former is rotated by the electric motor, whereas rotation caused solely by the downward forces transmitted by the spring to the spring support plate is prevented.

Ultimately, this solution ensures that the mechanism is not able to move from a particular attained position, due solely to the effect of the weight of the vehicle and the other resilient forces caused by the deformation of the spring when the vehicle is in use.

However, this solution has some disadvantages caused by the high friction of the screw/nut screw kinematic mechanism, such as the high electrical energy consumption by the electric motor (since it is necessary to expend a lot of energy to counteract the friction forces), long activation times (since a considerable part of the power input to the electric motor is used to counteract the friction, and is therefore not used to move the spring support plate vertically), and high wear of the screw and nut screw threads (the tangential force components on the threads are higher, resulting in the device having a shorter service life).

### Summary of the invention

The object of this invention is to overcome the aforementioned problems.

To achieve this object, a spring and shock absorber assembly for a vehicle suspension according to the invention comprises an additional mechanism for blocking the relative rotation between the screw and the nut screw, which is necessary in order to be able to maintain the desired position of the spring support plate under the action of the forces transmitted to the spring by said plate without having to continue to supply the electric motor with electricity, even when a high-efficiency, i.e. reversible, screw/nut screw kinematic mechanism is used.

The electromechanical adjustment device according to the invention comprises: an electric motor adapted to generate a rotary motion; a motion conversion mechanism which extends along an axis parallel but not coincident to the axis of the shock absorber and which in turn includes a nut screw which meshes with a screw rotated by the electric motor, which nut screw is connected to the spring support plate for conjoint translation therewith; and a mechanism for blocking the rotation of the screw with respect to the nut screw, comprising a clutch, the opening action of which is controlled by exciting an electromagnet with electrical current. The screw/nut screw kinematic mechanism is preferably high-efficiency, for example is achieved by the use of a ball screw.

The mechanism for blocking the rotation of the screw with respect to the nut screw comprises an electrically actuated clutch which includes two discs provided with profiles which mesh with one another, i.e. a lower disc which rotates together with the screw, and an upper disc which is non-rotatably fixed but is able to translate axially along the axis of the screw.

According to one embodiment, on the two faces facing one another, the two discs have a series of teeth which may engage with one another. These teeth may have profiles which, with respect to a plane containing the axis of the screw, form different angles on their right-hand side and on their left-hand side, i.e. depending on the engaged flank.

In particular, when the screw tends to rotate in a first direction, the two engaged teeth are brought into contact with one another on a first side, which is advantageously characterized by a small angle of the profile of the teeth with respect to a plane containing the axis of the screw, and the sliding of a tooth of the upper disc with respect to the tooth of the lower disc is therefore blocked, thus also preventing the screw from rotating with respect to the nut screw and preventing the upward translation of the upper disc.

By contrast, when the screw tends to rotate in a second direction counter to the first direction, the two engaged teeth are brought into contact with one another on a second side, which is advantageously characterized by a large angle of the profile of the teeth with respect to a plane containing the axis of the screw, and it is therefore possible to slide a tooth of the upper disc with respect to the tooth of the lower disc, thus making it possible to rotate the screw with respect to the nut screw and consequently translate the upper disc upward.

The first direction of rotation corresponds to the direction of rotation of the screw during the downward motion of the spring support plate. This downward motion is triggered by the downward force transmitted by the spring to the spring support plate.

By contrast, the second direction of rotation corresponds to the direction of rotation of the screw during the upward motion of the spring support plate. This upward motion is only possible when the screw is activated by the electric motor.

The upper disc is preferably pushed downward by resilient return means, in so doing ensuring that the profiles of the upper disc enter into engagement with the profiles of the lower disc. The upper disc may also be moved upward by using an electrical current to excite an electromagnet arranged above the upper disc. By exciting the electromagnet, the upper disc is attracted and is translated upward until the teeth of the upper disc are no longer engaged with the teeth of the lower disc. In this latter condition, the mechanism is unblocked and the screw may freely rotate in one direction of rotation or in the other direction of rotation under the action of the torque transmitted by the electric motor, or under the action of the downward force transmitted by the spring through the spring support plate, or as a result of both of these two actions combined.

The aforesaid and other aims and advantages are achieved, according to one aspect of the invention, by a spring and shock absorber assembly for a vehicle suspension and by a method for moving the spring plate of a shock absorber which have the features defined in the accompanying claims.

### Brief description of the drawings

The functional and structural features of some preferred embodiments of a spring and shock absorber assembly for a vehicle suspension according to the invention will now be described. Reference is made to the appended drawings, in which:
- Fig. 1 is a schematic perspective view of a spring and shock absorber assembly for a vehicle suspension, according to one embodiment of the invention;
- Fig. 2 is a schematic axial cross-sectional view of the spring and shock absorber assembly for a vehicle suspension in Fig. 1;
- Fig. 3 is a schematic axial cross-sectional view of a detail in Fig. 2, in particular the mechanism for blocking the rotation of the screw;
- Fig. 4A and 4B are two schematic perspective views of a mechanical clutch associated with the mechanism for blocking the rotation in Fig. 3, in a condition in which the respective profiles are engaged and in a condition in which the respective profiles are disengaged, respectively, according to one embodiment of the invention; and
- Fig. 5A and 5B are schematic side views of the mechanical clutch in Fig. 4A and 4B shown in respective conditions in which the profiles are engaged on opposite sides of the teeth, according to one embodiment of the invention.

### Detailed description

Before describing in detail a plurality of embodiments of the invention, it should be clarified that the invention is not limited in its application to the design details and configuration of the components presented in the following description or illustrated in the drawings. The invention is capable of assuming other embodiments and of being implemented or constructed in practice in different ways. It should also be understood that the phraseology and terminology have a descriptive purpose and should not be construed as limiting.

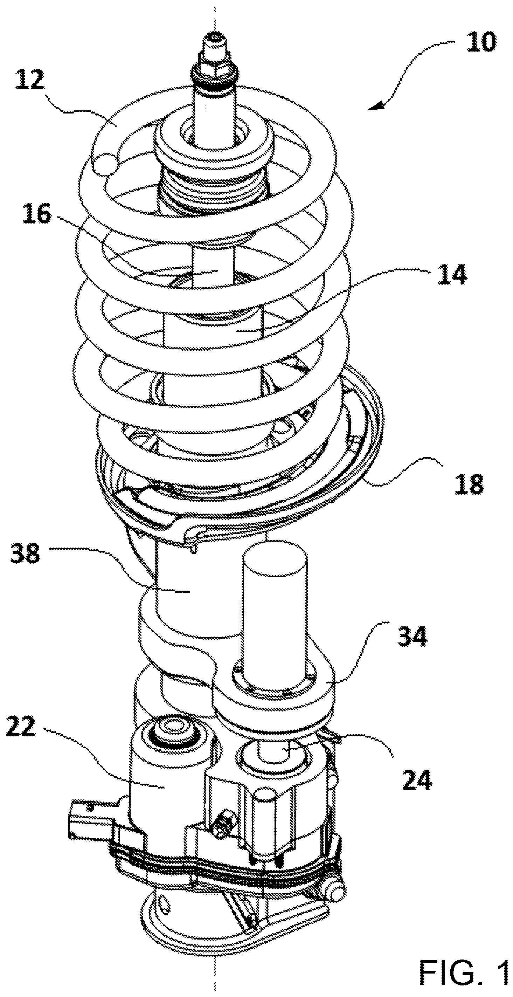

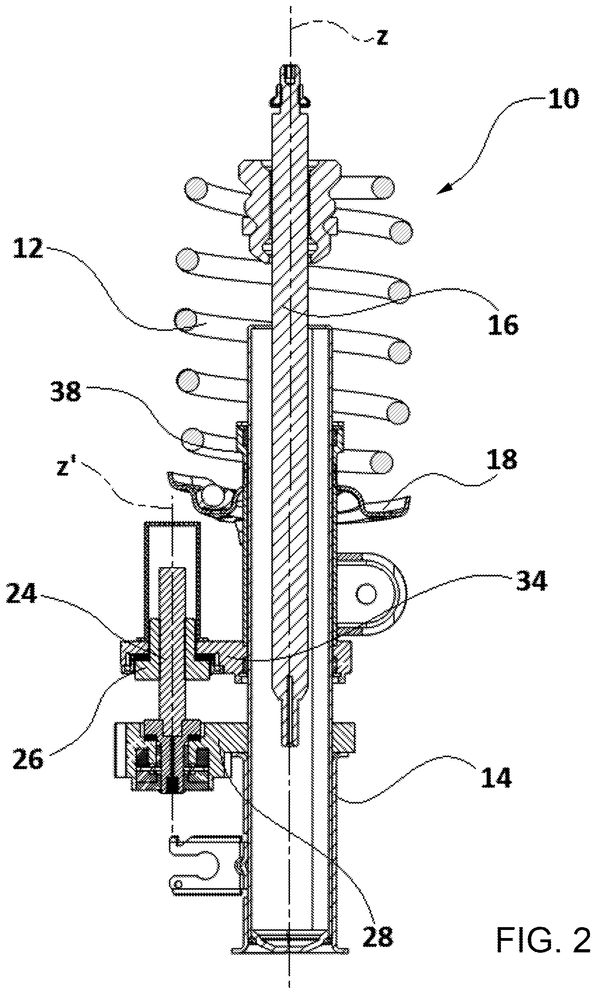

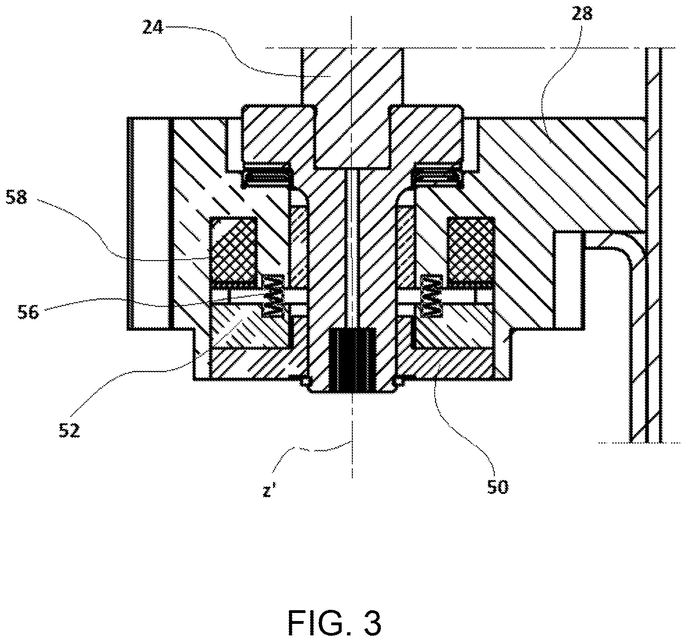

With reference made by way of example to Fig. 1 to 3, a shock absorber and spring assembly for a vehicle suspension according to this invention comprises a shock absorber 10 having a cylinder 14 and a rod 16 which extend along a first axis z, and a spring plate 18 which is arranged around the cylinder 14 of the shock absorber 10 and is slidable with respect thereto along said first axis z.

The following are also present: a spring 12, the bottom of which rests on the spring plate 18; and an electromechanical adjustment device arranged between the cylinder 14 of the shock absorber 10 and the spring plate 18, for varying in a continuous and controlled manner the vertical position of the lower end of the spring 12 and thus allowing the clearance of the vehicle from the ground to be adjusted.

This adjustment device comprises an electric motor 22 adapted to generate a rotary motion, and a screw and nut screw motion conversion mechanism 24, 26 adapted to convert the rotary motion generated by the electric motor 22 into a translational motion of the spring plate 18, wherein said motion conversion mechanism comprises a single screw 24 which extends along a second axis z' parallel to said first axis z and is adapted to be rotated by the electric motor 22 about said second axis z', and a single nut screw 26 which meshes with the screw 24 and is connected to the spring plate 18 for conjoint translation therewith, in such a way that, following the activation of the electric motor 22, the rotary motion transmitted by the electric motor 22 to the screw 24 is converted into translational motion of the nut screw 26 along said second axis z', and therefore into translational motion of the spring plate 18 with respect to the cylinder 14 of the shock absorber 10 along said first axis z.

The second axis z' is spaced from said first axis z in such a way that the unit formed by the screw 24 and the nut screw 26 is arranged eccentrically with respect to the cylinder 14 of the shock absorber 10 and to the spring plate 18.

The motion conversion mechanism further comprises a mechanism for blocking the rotation of the screw 24, which blocking mechanism includes a primary disc 50 which is connected to the screw 24 for conjoint rotation therewith, and an auxiliary disc 52 which is non-rotatably fixed with respect to the screw 24, the primary and auxiliary discs having respective profiles 50', 52' which mesh with one another.

The auxiliary disc 52 is movable along the axis z' from a blocking position (a lower position in the example shown) in which the profiles 50', 52' of the two primary 50 and auxiliary discs 52 are mutually engaged and the rotation of the screw 24 is prevented, and an unblocking position (an upper position in the example shown) in which the profiles 50', 52' of the two primary 50 and auxiliary discs 52 prevent mutual engagement and the rotation of the screw 24 is allowed.

According to one embodiment, the shock absorber and spring assembly for a vehicle suspension also comprises a first support arm 28 which carries the electric motor 22 and the screw 24 and is rigidly connected to the cylinder 14 of the shock absorber 10, a second support arm 34 which carries the nut screw 26 and is rigidly connected to the spring plate 18, and a guide sleeve 38 which is rigidly connected at one end to said second support arm 34 and at the other end to the spring plate 18 and is arranged around the cylinder 14 of the shock absorber 10 so as to be able to slide along the first axis z.

The mechanism for blocking the rotation of the screw 24 may advantageously be housed in a seat provided in the first support arm 28.

According to one preferred embodiment, the mechanism for blocking the rotation of the screw 24 comprises an electromagnet 58 adapted to attract the auxiliary disc 52 toward the unblocking position by means of electrical excitation, and resilient means 56 adapted to push the auxiliary disc 52 toward the blocking position.

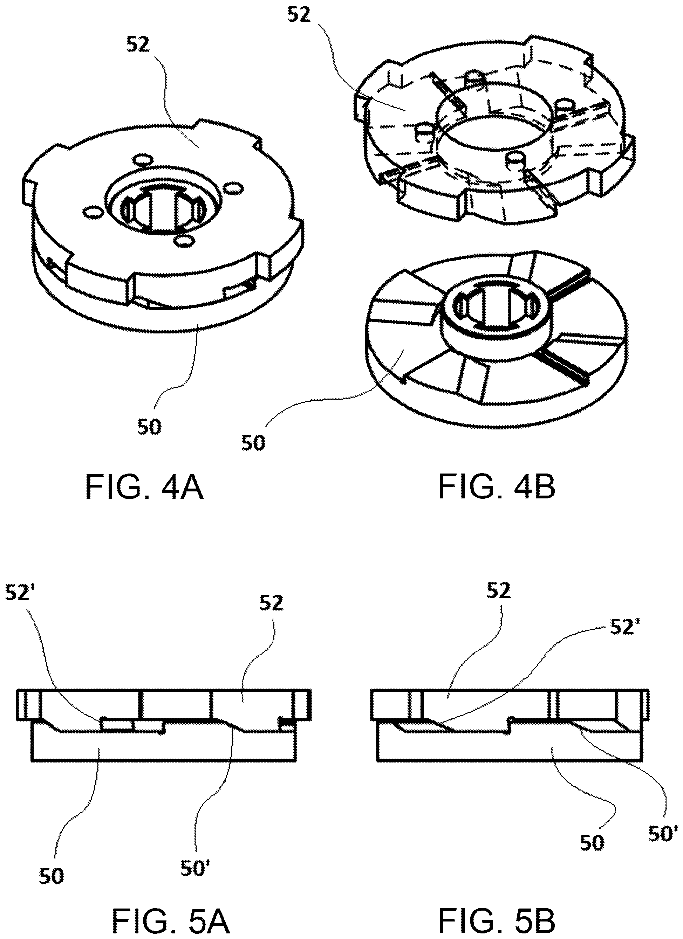

According to one embodiment, the mutually meshing profiles 50', 52' comprise respective teeth having a first side which has a first angle with respect to a plane containing the axis z' and which enters into engagement when the screw 24 rotates or tends to rotate in a first direction of rotation (advantageously when the spring plate 18 tends to move downward along the first axis z), and a second side which has a second angle with respect to a plane containing the axis z' that is greater than the first angle, said second side entering into engagement when the screw 24 rotates or tends to rotate in the opposite direction of rotation (advantageously when the spring plate 18 tends to move upward along the first axis z). This first direction of rotation and second direction of rotation may be, for example, a counterclockwise direction of rotation and a clockwise direction of rotation of the discs, respectively, as shown in Fig. 4A and 4B.

The first angle is preferably between 5° and 15° so that the sliding of the profile of the auxiliary disc 52 with respect to the profile of the primary disc 50 is blocked, and the second angle is between 65° and 75° so that it is possible for the profile of the auxiliary disc 52 to slide with respect to the profile of the primary disc 50. This configuration makes it possible to impart an initial course to the auxiliary disc 52 along the second axis z', by virtue of the mutual sliding of the profiles having the second angle. In this way, it is possible, for example, to move the auxiliary disc 52 closer to the possible electromagnet 58, thus reducing the excitation energy required to attract the auxiliary disc 52 toward the position of disengagement from the primary disc 50.

The first side preferably enters into engagement when the screw 24 rotates or tends to rotate so as to cause a descending motion of the nut screw 26 along the axis z', and the second side enters into engagement when the screw 24 rotates or tends to rotate so as to cause an ascending motion of the nut screw 26 along the axis z'.

According to one preferred embodiment, the screw 24 is a ball screw. A high-efficiency kinematic mechanism is thus obtained, reducing the friction and increasing the energy efficiency of the assembly.

The adjustment device may advantageously also comprise a speed reduction gear mechanism arranged between the electric motor 22 and the screw 24.

According to one aspect of the invention, a method for moving the spring plate 18 of a shock absorber 10 comprises the steps of providing a shock absorber and spring assembly for a vehicle suspension according to one or more of the embodiments described above.

The mechanism may be activated downward by means of the following steps. Starting from the condition in which the mechanism for blocking the rotation of the screw 24 is in the blocking position, in which the profiles 50', 52' of the two primary 50 and auxiliary discs 52 engage with one another (being advantageously engaged with one another on the first side, which does not allow relative sliding between the engaged teeth, or on the side of their first angle), the electric motor 22 is activated in the second direction of rotation until the teeth come into contact with each other on the second side (side of their second angle), which instead allows the relative sliding between the two engaged profiles.

The electric motor 22 is then made to continue to rotate in the second direction of rotation so that, by means of the relative sliding of the engaged teeth, the primary disc 50 rotates further with respect to the auxiliary disc 52, triggering a translation of the latter along the axis z' away from the primary disc 50.

The electromagnet 58 is then excited so as to further attract the auxiliary disc 52 along the axis z' until the profiles of the primary and auxiliary discs 50, 52 disengage from one another and the mechanism for blocking the rotation of the screw 24 unblocks, and the rotation of the electric motor 22 in the second direction of rotation is stopped so that, for example under the action of the downward force transmitted by the spring 12 through the spring plate 18, the screw 24 rotates in the first direction of rotation and the spring plate 18 moves downward along the first axis z, keeping the electromagnet 58 excited.

Once the spring plate 18 has reached the desired position along the axis z, the electromagnet 58 is de-excited, and the profiles of the two primary and auxiliary discs 50, 52 are brought back into engagement (advantageously on account of the action of the resilient means 56) and into contact with one another on their first side by the action of the downward force transmitted by the spring 12, causing the rotation of the device to be blocked. From this moment on, the vertical position of the spring plate 18 remains unchanged.

Given that the electromagnet 58 is preferably configured to operate on the principle of reluctance, it is possible to estimate the position of the auxiliary disc 52 with respect to the primary disc 50 by means of measuring the inductance of the magnetic circuit.

Similarly, the mechanism may be activated upward by means of the following steps. Starting from the condition in which the blocking mechanism is engaged and the teeth of the two discs 50, 52 are therefore in contact on the first side, which does not allow relative sliding between the engaged teeth, the electric motor 22 is activated in the second direction of rotation until the teeth come into contact on the opposite side (second side), which allows the relative sliding between the two engaged profiles. The motor 22 continues to rotate in the second direction of rotation and, on account of the relative sliding of the engaged teeth, the primary disc 50 may also rotate with respect to the auxiliary disc 52 and this latter begins to translate upward. At this point, the electromagnet 58 of the blocking device is excited and a further action is exerted on the auxiliary disc 52, which action also translates said auxiliary disc upward until the teeth of this auxiliary disc 52 are no longer engaged with the teeth of the primary disc 50, and the mechanism unblocks. Starting from this condition, the electric motor 22 continues to be controlled in the second direction of rotation, causing the spring plate 18 to ascend. During the entire ascension phase, the electromagnet 58 is kept excited. Once it has reached the desired position, the electric motor 22 is de-energized and the electromagnet 58 is de-excited, and the profiles of the two primary and auxiliary discs 50, 52 are brought back into engagement (advantageously on account of the action of the resilient means 56) and into contact on their first side by the action of the downward force transmitted by the spring 12, causing the rotation of the device to be blocked. From this moment on, the vertical position of the spring plate 18 remains unchanged.

Throughout this description and in the claims, the terms and expressions indicating positions and orientations, such as "axial" or "transverse," refer to the first axis z and the second axis z'.

Various aspects and embodiments of a spring and shock absorber assembly for a vehicle suspension and a method for moving the spring plate of a shock absorber according to the invention have been described. It is understood that each embodiment may be combined with any other embodiment. Furthermore, the invention is not limited to the described embodiments, but may be varied within the scope defined by the appended claims.

## Claims

1. Shock absorber and spring assembly for a vehicle suspension, comprising:
- a shock absorber (10) having a cylinder (14) and a rod (16) which extend along a first axis (z),
- a spring plate (18) which is arranged around the cylinder (14) of the shock absorber (10) and is slidable with respect to this along said first axis (z),
- a spring (12), the bottom of which rests on the spring plate (18), and
- an electromechanical adjustment device arranged between the cylinder (14) of the shock absorber (10) and the spring plate (18) for varying in a continuous and controlled manner the vertical position of the lower end of the spring (12) and thus allowing the clearance of the vehicle from the ground to be adjusted,
wherein the adjustment device comprises an electric motor (22) adapted to generate a rotary motion and a screw and nut screw motion conversion mechanism (24, 26) adapted to convert the rotary motion generated by the electric motor (22) into a translational motion of the spring plate (18),
wherein said motion conversion mechanism comprises a single screw (24) which extends along a second axis (z') parallel to said first axis (z) and is adapted to be rotated by the electric motor (22) about said second axis (z'), and a single nut screw (26) which meshes with the screw (24) and is connected to the spring plate (18) for conjoint translation therewith, in such a way that, following the activation of the electric motor (22), the rotary motion transmitted by the electric motor (22) to the screw (24) is converted into translational motion of the nut screw (26) along said second axis (z'), and therefore into translational motion of the spring plate (18) with respect to the cylinder (14) of the shock absorber (10) along said first axis (z), said second axis (z') being spaced from said first axis (z) in such a way that the unit formed by the screw (24) and the nut screw (26) is arranged eccentrically with respect to the cylinder (14) of the shock absorber (10) and to the spring plate (18);
**characterised in that**
said motion conversion mechanism further comprising a mechanism for blocking the rotation of the screw (24), which blocking mechanism includes a primary disc (50) which is connected to the screw (24) for conjoint rotation therewith, and an auxiliary disc (52) which is fixed in rotation with respect to the screw (24), said primary (50) and auxiliary (52) discs having respective profiles (50', 52') which mesh with one another, the auxiliary disc (52) being translatable along the second axis (z') from a blocking position in which the profiles (50', 52') of the two primary (50) and auxiliary (52) discs are mutually engaged and the rotation of the screw (24) is prevented, and an unblocking position in which the profiles (50', 52') of the two primary (50) and auxiliary (52) discs prevent mutual engagement and the rotation of the screw (24) is allowed.

2. Device according to claim 1, further comprising a first support arm (28) which carries the electric motor (22) and the screw (24) and is rigidly connected to the cylinder (14) of the shock absorber (10), a second support arm (34) which carries the nut screw (26) and is rigidly connected to the spring plate (18), and a guide sleeve (38) which is rigidly connected at one end to said second support arm (34) and at the other end to the spring plate (18) and is arranged around the cylinder (14) of the shock absorber (10) so as to be able to slide along said first axis (z).

3. Device according to claim 2, wherein the mechanism for blocking the rotation of the screw (24) is housed in a seat provided in the first support arm (28).

4. Device according to any of the preceding claims, wherein the mechanism for blocking the rotation of the screw (24) comprises an electromagnet (58) adapted to attract the auxiliary disc (52) toward the unblocking position by means of electrical excitation, and resilient means (56) adapted to push the auxiliary disc (52) toward the blocking position.

5. Device according to any of the preceding claims, wherein the mutually meshing profiles (50', 52') comprise respective teeth having a first side which has a first angle with respect to a plane containing the axis (z') and which enters into engagement when the screw (24) rotates or tends to rotate in a first direction of rotation, and a second side which has a second angle with respect to a plane containing the axis (z') that is greater than the first angle, said second side entering into engagement when the screw (24) rotates or tends to rotate in the opposite direction of rotation.

6. Device according to claim 5, wherein the first angle is between 5° and 15° so that the sliding of the profile of the auxiliary disc (52) with respect to the profile of the primary disc (50) is blocked, and the second angle is between 65° and 75° so that it is possible for the profile of the auxiliary disc (52) to slide with respect to the profile of the primary disc (50).

7. Device according to claim 5 or 6, wherein the first side enters into engagement when the screw (24) rotates or tends to rotate so as to cause a descending motion of the nut screw (26) along the axis (z'), and the second side enters into engagement when the screw (24) rotates or tends to rotate so as to cause an ascending motion of the nut screw (26) along the axis (z').

8. Shock absorber and spring assembly according to any of the preceding claims, wherein the screw (24) is a ball screw.

9. Shock absorber and spring assembly according to any of the preceding claims, wherein the adjustment device further comprises a speed reduction gear mechanism arranged between the electric motor (22) and the screw (24).

10. Method for moving the spring plate (18) of a shock absorber (10), comprising the steps of:
a) providing a shock absorber and spring assembly for a vehicle suspension according to any of claims 4 to 9;
b) starting from the condition in which the mechanism for blocking the rotation of the screw (24) is in the blocking position, in which the profiles (50', 52') of the two primary (50) and auxiliary (52) discs are mutually engaged on the side of their first angle, activating the electric motor (22) in the second direction of rotation until the teeth come into contact with one another on the side of their second angle, which allows the relative sliding of the two profiles (50', 52');
c) continuing to rotate the electric motor (22) in the second direction of rotation so that, by means of the relative sliding of the engaged teeth, the primary disc (50) rotates further with respect to the auxiliary disc (52), triggering a translation of the latter along the axis (z') away from the primary disc (50);
d) exciting the electromagnet (58) so as to further attract the auxiliary disc (52) along the axis (z') until the profiles of the primary and auxiliary discs (50, 52) and the mechanism for blocking the rotation of the screw (24) unblocks;
e) to obtain a downward motion of the spring plate (18): stopping the rotation of the electric motor (22) in the second direction of rotation, so that the screw (24) rotates in the first direction of rotation and the spring plate (18) moves downward along the first axis (z), keeping the electromagnet (58) excited; or
f) to obtain an upward motion of the spring plate (18): continuing to rotate the electric motor (22) in the second direction of rotation, so that the screw (24) continues to rotate in the second direction of rotation and the spring plate (18) moves upward along the first axis (z), keeping the electromagnet (58) excited; and
g) once the spring plate (18) has reached the desired position, and only in the case of upward motion, stopping the rotation of the electric motor (22) in the second direction of rotation, de-exciting the electromagnet (58), bringing the profiles of the two primary and auxiliary discs (50, 52) back into engagement and bringing the same profiles into contact on their first side by the action of the downward force transmitted by the spring (12), causing the rotation of the device to be blocked.

## Patentansprüche

1. Stoßdämpfer- und Federanordnung für eine Fahrzeugfederung, umfassend:
- einen Stoßdämpfer (10) aufweisend einen Zylinder (14) und eine Stange (16), die sich entlang einer ersten Achse (z) erstrecken,
- einen Federteller (18), der um den Zylinder (14) des Stoßdämpfers (10) angeordnet ist und in Bezug auf diesen entlang der ersten Achse (z) gleitend ist,
- eine Feder (12), deren Boden auf dem Federteller (18) aufliegt, und
- eine elektromechanische Einstellvorrichtung, die zwischen dem Zylinder (14) des Stoßdämpfers (10) und dem Federteller (18) angeordnet ist, um die vertikale Position des unteren Endes der Feder (12) kontinuierlich und kontrolliert zu variieren und dadurch die Einstellung der Bodenfreiheit des Fahrzeugs zu ermöglichen,
wobei die Einstellvorrichtung einen Elektromotor (22) umfasst, der eingerichtet ist, eine Drehbewegung zu erzeugen, sowie einen Schraube-und-Mutterschrauben-Bewegungsumwandlungsmechanismus (24, 26), der eingerichtet ist, die von dem Elektromotor (22) erzeugte Drehbewegung in eine Translationsbewegung des Federtellers (18) umzuwandeln,
wobei der Bewegungsumwandlungsmechanismus eine einzelne Schraube (24) umfasst, die sich entlang einer zweiten Achse (z') erstreckt, die sich parallel zu der ersten Achse (z) erstreckt, und eingerichtet ist, durch den Elektromotor (22) um diese zweite Achse (z') gedreht zu werden, sowie eine einzelne Mutterschraube (26), die mit der Schraube (24) ineinandergreift und mit dem Federteller (18) zur gemeinsame Verschiebung mit diesem verbunden ist, sodass die Drehbewegung, die von dem Elektromotor (22) auf die Schraube (24) übertragen wird, nach der Aktivierung des Elektromotors (22) in eine Translationsbewegung der Mutterschraube (26) entlang der zweiten Achse (z') und somit in eine Translationsbewegung des Federtellers (18) in Bezug auf den Zylinder (14) des Stoßdämpfers (10) entlang der ersten Achse (z) umgewandelt wird, wobei die zweite Achse (z') von der ersten Achse (z) beabstandet ist, sodass die Einheit, die aus der Schraube (24) und der Mutterschraube (26) besteht, exzentrisch in Bezug auf den Zylinder (14) des Stoßdämpfers (10) und den Federteller (18) angeordnet ist;
**dadurch gekennzeichnet, dass** der Bewegungsumwandlungsmechanismus ferner einen Mechanismus zum Blockieren der Drehung der Schraube (24), umfasst, wobei der Blockiermechanism eine Primärscheibe (50), die mit der Schraube (24) zur gemeinsam Drehung mit dieser verbunden ist, und eine Hilfsscheibe (52), die in Bezug auf die Schraube (24) drehfest ist, umfasst, wobei die Primärscheibe (50) und die Hilfsscheibe (52) jeweils Profile (50', 52') haben, die ineinandergreifen, wobei die Hilfsscheibe (52) entlang der zweiten Achse (z') von einer Blockierposition, in der die Profile (50', 52') der beiden Primär-(50) und Hilfsscheibe (52) gegenseitig in Eingriff stehen und die Drehung der Schraube (24) verhindert wird, in eine Freigabeposition verschiebbar ist, in der die Profile (50', 52') der beiden Primär- (50) und Hilfsscheibe (52) einen gegenseitigen Eingriff verhindern und die Drehung der Schraube (24) ermöglicht wird.

2. Vorrichtung nach Anspruch 1, ferner umfassend einen ersten Tragarm (28), der den Elektromotor (22) und die Schraube (24) trägt und fest mit dem Zylinder (14) des Stoßdämpfers (10) verbunden ist, einen zweiten Tragarm (34), der die Mutterschraube (26) trägt und fest mit dem Federteller (18) verbunden ist, und eine Führungshülse (38), die an einem Ende mit dem zweiten Tragarm (34) und an dem anderen Ende mit dem Federteller (18) fest verbunden ist und um den Zylinder (14) des Stoßdämpfers (10) angeordnet ist, so dass sie entlang der ersten Achse (z) gleiten kann.

3. Vorrichtung nach Anspruch 2, wobei der Mechanismus zum Blockieren der Drehung der Schraube (24) in einem in dem ersten Tragarm (28) vorgesehenen Sitz aufgenommen wird.

4. Vorrichtung nach einem der vorhergehenden Ansprüche, wobei der Mechanismus zum Blockieren der Drehung der Schraube (24) einen Elektromagneten (58) umfasst, der eingerichtet ist, die Hilfsscheibe (52) mittels elektrischer Erregung in Richtung der Freigabeposition anzuziehen, sowie elastische Mittel (56), die eingerichtet sind, die Hilfsscheibe (52) in Richtung der Blockierposition zu drücken.

5. Vorrichtung nach einem der vorhergehenden Ansprüche, wobei die ineinandergreifenden Profile (50', 52') entsprechende Zähne umfassen, die eine erste Seite aufweisen, die einen ersten Winkel in Bezug auf eine Ebene hat, die die Achse (z') enthält, und die in Eingriff tritt, wenn die Schraube (24) in einer ersten Drehrichtung dreht oder zu drehen versucht, und eine zweite Seite aufweisen, die einen zweiten Winkel in Bezug auf eine Ebene hat, die die Achse (z') enthält, der größer als der erste Winkel ist, wobei die zweite Seite in Eingriff tritt, wenn die Schraube (24) in der entgegengesetzten Drehrichtung dreht oder zu drehen versucht.

6. Vorrichtung nach Anspruch 5, wobei der erste Winkel zwischen 5° und 15° liegt, sodass das Gleiten des Profils der Hilfsscheibe (52) in Bezug auf das Profil der Primärscheibe (50) blockiert ist, und der zweite Winkel zwischen 65° und 75° liegt, sodass das Profil der Hilfsscheibe (52) in Bezug auf das Profil der Primärscheibe (50) gleiten kann.

7. Vorrichtung nach Anspruch 5 oder 6, wobei die erste Seite in Eingriff tritt, wenn die Schraube (24) dreht oder zu drehen versucht, so dass eine Abwärtsbewegung der Mutterschraube (26) entlang der Achse (z') verursacht wird, und die zweite Seite in Eingriff tritt, wenn die Schraube (24) dreht oder zu drehen versucht, so dass eine Aufwärtsbewegung der Mutterschraube (26) entlang der Achse (z') verursacht wird.

8. Stoßdämpfer- und Federanordnung nach einem der vorhergehenden Ansprüche, wobei die Schraube (24) eine Kugelschraube ist.

9. Stoßdämpfer- und Federanordnung nach einem der vorhergehenden Ansprüche, wobei die Einstellvorrichtung ferner einen Untersetzungsgetriebemechanismus umfasst, der zwischen dem Elektromotor (22) und der Schraube (24) angeordnet ist.

10. Verfahren zum Bewegen des Federtellers (18) eines Stoßdämpfers (10), umfassend die folgenden Schritte:
a) Bereitstellen einer Stoßdämpfer- und einer Federanordnung nach einem der Ansprüche 4 bis 9;
b) Ausgehend von der Bedingung, in der sich der Mechanismus zum Blockieren der Drehung der Schraube (24) in der Blockierposition befindet, in der die Profile (50', 52') der beiden Primär- (50) und Hilfsscheiben (52) an der Seite ihres ersten Winkels gegenseitig in Eingriff stehen, Aktivieren des Elektromotors (22) in der zweiten Drehrichtung, bis die Zähne auf der Seite ihres zweiten Winkels miteinander in Kontakt kommen, wodurch das relative Gleiten der beiden Profile (50', 52') ermöglicht wird;
c) Weiter Drehen des Elektromotors (22) in der zweiten Drehrichtung, sodass die Primärscheibe (50), mittels des relativen Gleitens der in Eingriff stehenden Zähne, weiter in Bezug auf die Hilfsscheibe (52) dreht, Auslösen eine Translation der letzteren entlang der Achse (z') weg von der Primärscheibe (50);
d) Erregen des Elektromagneten (58), um die Hilfsscheibe (52) weiter entlang der Achse (z') anzuziehen, bis die Profile der Primär- und Hilfsscheiben (50, 52) und der Mechanismus zum Blockieren der Drehung der Schraube (24) entriegelt sind;
e) um eine Abwärtsbewegung des Federtellers (18) zu erreichen: Stoppen der Drehung des Elektromotors (22) in der zweiten Drehrichtung, sodass die Schraube (24) in der ersten Drehrichtung dreht und sich der Federteller (18) entlang der ersten Achse (z) nach unten bewegt, indem der Elektromagnet (58) erregt bleibt; oder
f) um eine Aufwärtsbewegung des Federtellers (18) zu erreichen: Weiterdrehen des Elektromotors (22) in der zweiten Drehrichtung, sodass die Schraube (24) in der zweiten Drehrichtung weiterdreht und sich der Federteller (18) entlang der ersten Achse (z) nach oben bewegt, indem der Elektromagnet (58) erregt bleibt; und
g) Sobald der Federteller (18) die gewünschte Position erreicht hat und nur im Fall einer Aufwärtsbewegung: Stoppen der Drehung des Elektromotors (22) in der zweiten Drehrichtung, Trennen des Elektromagneten (58) von dem Stromnetz, Bringen der Profile der Primär- und Hilfsscheiben (50, 52) wieder in Eingriff und Bringen derselben Profile in Kontakt auf ihrer ersten Seite durch die Wirkung der Abwärtskraft, die von der Feder (12) übertragen wird, wodurch die Drehung der Vorrichtung blockiert wird

## Revendications

1. Ensemble amortisseur et ressort pour une suspension de véhicule, comprenant
- un amortisseur (10) ayant un cylindre (14) et une tige (16) qui s'étendent selon un premier axe (z),
- une coupelle de ressort (18) disposée autour du cylindre (14) de l'amortisseur (10) et coulissant par rapport à celui-ci le long dudit premier axe (z),
- un ressort (12) dont le fond repose sur la coupelle de ressort (18), et
- un dispositif de réglage électromécanique agencé entre le cylindre (14) de l'amortisseur (10) et la coupelle de ressort (18) pour faire varier de manière continue et contrôlée la position verticale de l'extrémité inférieure du ressort (12) et permettant ainsi d'ajuster le dégagement du véhicule par rapport au sol,
dans lequel le dispositif de réglage comprend un moteur électrique (22) conçu pour générer un mouvement rotatif, ainsi qu'un mécanisme de conversion de mouvement visécrou (24, 26) destiné à convertir le mouvement rotatif généré par le moteur électrique (22) en un mouvement de translation de la coupelle de ressort (18),
dans lequel le mécanisme de conversion de mouvement comprend une vis unique (24) qui s'étend selon un deuxième axe (z') parallèle audit premier axe (z) et qui est entraînée en rotation par le moteur électrique (22) autour dudit deuxième axe (z'), ainsi qu'un écrou unique (26) qui engrène avec la vis (24) et est relié à la coupelle de ressort (18) de manière à translater conjointement avec celle-ci, de sorte que, après activation du moteur électrique (22), le mouvement rotatif transmis par le moteur électrique (22) à la vis (24) est converti en un mouvement de translation de l'écrou (26) le long dudit deuxième axe (z'), et donc en un mouvement de translation de la coupelle de ressort (18) par rapport au cylindre (14) de l'amortisseur (10) le long dudit premier axe (z), ledit deuxième axe (z') étant espacé du premier axe (z) de sorte que l'ensemble constitué par la vis (24) et l'écrou (26) est disposé de manière excentrée par rapport au cylindre (14) de l'amortisseur (10) et à la coupelle de ressort (18);
**caractérisé en ce que** le mécanisme de conversion de mouvement comprend en outre un mécanisme de blocage de la rotation de la vis (24), lequel mécanisme de blocage comprend un disque primaire (50) solidaire en rotation de la vis (24), et un disque auxiliaire (52) fixe en rotation par rapport à la vis (24), lesdits disques primaire (50) et auxiliaire (52) possèdent des profils respectifs (50', 52') qui engrènent entre eux, le disque auxiliaire (52) étant translatable le long du deuxième axe (z') entre une position de blocage, dans laquelle les profils (50', 52') des disques primaire (50) et auxiliaire (52) sont mutuellement engagés et empêchent la rotation de la vis (24), et une position de déblocage, dans laquelle les profils (50', 52') des disques primaire (50) et auxiliaire (52) empêchent leur engagement mutuel et autorisent la rotation de la vis (24).

2. Dispositif selon la revendication 1, comprenant en outre un premier bras de support (28) qui porte le moteur électrique (22) et la vis (24), et qui est solidaire du cylindre (14) de l'amortisseur (10), un deuxième bras de support (34) qui porte l'écrou (26) et qui est solidaire de la coupelle de ressort (18), et un manchon de guidage (38) fixé rigidement à une extrémité audit deuxième bras de support (34) et à l'autre extrémité à la coupelle de ressort (18), ledit manchon (38) étant agencé autour du cylindre (14) de l'amortisseur (10) afin de pouvoir coulisser le long dudit premier axe (z).

3. Dispositif selon la revendication 2, dans lequel le mécanisme de blocage de la rotation de la vis (24) est logé dans un siège prévu dans le premier bras de support (28).

4. Dispositif selon l'une quelconque des revendications précédentes, dans lequel le mécanisme de blocage de la rotation de la vis (24) comprend un électroaimant (58) conçu pour attirer le disque auxiliaire (52) vers la position de déblocage sous l'effet d'une excitation électrique, et des moyens élastiques (56) conçus pour repousser le disque auxiliaire (52) vers la position de blocage.

5. Dispositif selon l'une quelconque des revendications précédentes, dans lequel les profils engrenants (50', 52') comprennent des dents respectives dont un premier flanc présente un premier angle par rapport à un plan contenant l'axe (z') et entre en engagement lorsque la vis (24) tourne ou tend à tourner dans une première direction de rotation, et dont un deuxième flanc présente un deuxième angle par rapport à un plan contenant l'axe (z') supérieur au premier angle, ce deuxième flanc entrant en engagement lorsque la vis (24) tourne ou tend à tourner dans la direction opposée de rotation.

6. Dispositif selon la revendication 5, dans lequel le premier angle est compris entre 5° et 15°, de sorte que le glissement du profil du disque auxiliaire (52) par rapport au profil du disque primaire (50) est bloqué, et le deuxième angle est compris entre 65° et 75°, de sorte qu'il est possible pour le profil du disque auxiliaire (52) de glisser par rapport à celui du disque primaire (50).

7. Dispositif selon la revendication 5 ou 6, dans lequel le premier flanc entre en engagement lorsque la vis (24) tourne ou tend à tourner de manière à entraîner un mouvement descendant de l'écrou (26) le long de l'axe (z'), et le deuxième flanc entre en engagement lorsque la vis (24) tourne ou tend à tourner de manière à entraîner un mouvement ascendant de l'écrou (26) le long de l'axe (z').

8. Ensemble amortisseur et ressort selon l'une quelconque des revendications précédentes, dans lequel la vis (24) est une vis à billes.

9. Ensemble amortisseur et ressort selon l'une quelconque des revendications précédentes, dans lequel le dispositif de réglage comprend en outre un mécanisme de réduction de vitesse disposé entre le moteur électrique (22) et la vis (24).

10. Procédé de déplacement de la coupelle de ressort (18) d'un amortisseur (10), comprenant les étapes de:
a) prévoir un ensemble amortisseur et ressort selon l'une quelconque des revendications 4 à 9;
b) en partant de la condition dans laquelle le mécanisme de blocage de la rotation de la vis (24) est en position de blocage, où les profils (50', 52') des deux disques primaire (50) et auxiliaire (52) sont mutuellement engagés sur le côté de leur premier angle, activer le moteur électrique (22) dans la deuxième direction de rotation jusqu'à ce que les dents viennent en contact les unes avec les autres sur le côté de leur deuxième angle, ce qui permet le glissement relatif des deux profils (50', 52');
c) poursuivre la rotation du moteur électrique (22) dans la deuxième direction de rotation de manière à ce que, par le glissement relatif des dents engagées, le disque primaire (50) tourne davantage par rapport au disque auxiliaire (52), provoquant une translation de ce dernier le long de l'axe (z') en s'éloignant du disque primaire (50);
d) exciter l'électroaimant (58) afin d'attirer davantage le disque auxiliaire (52) le long de l'axe (z') jusqu'à ce que les profils des disques primaire et auxiliaire (50, 52) se désengagent et que le mécanisme de blocage de la rotation de la vis (24) soit débloqué;
e) pour obtenir un mouvement descendant de la coupelle de ressort (18), arrêter la rotation du moteur électrique (22) dans la deuxième direction de rotation, de sorte que la vis (24) tourne dans la première direction de rotation et que la coupelle de ressort (18) descende le long du premier axe (z), en maintenant l'électroaimant (58) excité;
f) pour obtenir un mouvement ascendant de la coupelle de ressort (18), poursuivre la rotation du moteur électrique (22) dans la deuxième direction de rotation, de sorte que la vis (24) continue de tourner dans la deuxième direction de rotation et que la coupelle de ressort (18) monte le long du premier axe (z), en maintenant l'électroaimant (58) excité;
g) une fois que la coupelle de ressort (18) a atteint la position souhaitée, et uniquement dans le cas d'un mouvement ascendant, arrêter la rotation du moteur électrique (22) dans la deuxième direction de rotation, désactiver l'électroaimant (58), réengager les profils des deux disques primaire et auxiliaire (50, 52) et amener ces profils en contact sur leur premier côté sous l'effet de la force descendante transmise par le ressort (12), provoquant ainsi le blocage de la rotation du dispositif.
